# EUROPEAN PATENT APPLICATION

(11) **EP 2 821 565 A1**
(43) Date of publication of application: **07.01.2015**
(21) Application number: 12718278.0
(22) Date of filing: 28.02.2012
(51) Int. Cl.: E04H 12/22, F03D 1/00, F03D 11/04

(54) **CONNECTION BETWEEN A WIND TURBINE TOWER AND ITS FOUNDATION**

(71) Applicant: MS Enertech S.L., 09006 Burgos (ES)
(72) Inventor: CARRIL GONZÁLEZ, José, Ramón, E-09006 Burgos (ES); HERNANDO ARAGÓN, Alvaro, E-09006 Burgos (ES); MARTÍNEZ CAMARERO, Enrique, E-09006 Burgos (ES)
(74) Representative: Stiebe, Lars Magnus
(86) International application number: PCT/ES2012/070127
(87) International publication number: WO 2013/156632

(57) **Abstract**

The invention relates to a connection between a tower (7) of a wind generator and its foundation established by an interface formed by flexible elements independent from one another which are formed by a series of tensioned cables (1). Each of these cables is located inside vertical housing means (4) which are embedded in the foundation.

The invention also relates to a method of execution of the connection between a tower (7) of a wind generator and its foundation (8), comprising a series of stages, some of which vary depending on whether or not the foundation (8) has central lightweighting. It also generates variation in some aspect if the tower is made of metal or concrete and, in this case, if the tensioning cables of the tower are common to or independent of those of the connection.

## Description

### Technical Field of the Invention

The present invention corresponds to the technical field of wind energy, specifically to wind generator towers and the connection interface between the latter and its foundation.

### Background of the Invention

Machines for producing wind energy today have experienced significant progress, having obtained high-powered wind generators which allow optimizing use of the sites, improving quality of the electrical energy discharged into the electrical grid, obtaining greater system stability and maximizing unstable power.

Mass wind generator production up until now had allowed reducing construction and installation costs of wind farms, but with the current use of high-powered wind generators, they have a more complicated civil engineering component in installation and they still cannot be mass produced, whereby production costs are rising again.

One of the most important aspects in both the design and building stage is the connection interface between the tower of the wind generator and the foundation thereof.

Said interface is one of the areas subjected to the greatest amount of stress in the structure because it is the stress transmission pathway from the tower to the foundation in the ground bearing the structure, so it requires particular care in the design stage, whereas in the building stage it is an area requiring a number of assembly operations with minimal leveling tolerances allowed.

Examples of the state of the art include the following documents with references DE102004031655A1, WO2005095792, and DE102005044989.

In the first document with reference DE102004031655A1, a ferrule is used as a connection element between the tower of the wind generator and its foundation. Said element is made up of two annular steel flanges, a lower one and an upper one, attached by rolled steel sheet welded to them, forming the side surface of the body of the ferrule.

These three parts form an impermeable rigid solid that is independent from the rest of the structure and heavy, being able to transmit stresses from the base of the tower to the foundation in the underlying ground bearing the structure.

In the second document with the aforementioned reference, WO2005095792, an element known as a bolt cage is used, consisting of a lower and an upper annular steel flange between which there is lattice work of bolts screwed to respective flanges.

Finally, in document with reference DE102005044989 a bolt cage is also used as a solution.

This element, formed by three portions, is a permeable rigid mechanism and weighs less than the ferrule, capable of transmitting stresses from the base of the tower to the foundation in the underlying ground bearing the structure.

In the case of using a ferrule in the connection interface between the tower of the wind generator and its foundation, there are certain drawbacks, such as the total impermeability it has with respect to the connection structure. This is due to the existence of the rolled steel sheet, which is a continuous part generating a barrier in the foundation which prevents concreting continuity, further complicating pouring and vibrating the concrete. It also prevents the continuity of inner reinforcement bars, which generates the need for a significant amount of auxiliary reinforcement around the ferrule, which considerably complicates construction and increases assembly times and the final cost of the foundation.

In turn, this ferrule creates a cold steel-concrete joint by contact of the foundation concrete with the rolled steel sheet. This generates the need to place connectors on the entire side surface of the sheet, which causes associated drawbacks, such as having to prolong the reinforcement by tractions along the entire height of the ferrule associated with the oblique compression generated. Furthermore, in the area of the sheet outside the foundation and as a result of fatigue, the ferrule may become detached from the concrete, which will modify the structural response of the tower and facilitate the entrance of external agents affecting durability.

Another problem associated with the use of the ferrule is due to the constitution thereof from three parts forming a rigid solid that has to be leveled, and due to the lack of flexibility thereof, it may be rather complicated, especially when the maximum tolerances allowed for obtaining suitable verticality of the tower are of the order of 4 mm. This generates a number of leveling operations that increase assembly time.

Furthermore, it is necessary to place leveling feet which must also be leveled under the lower flange.

Finally, it is necessary to mention the excessive weight due to the considerable thickness of material necessary in the flanges to prevent concentrations of tensions in the attachment with the sheet, and the complex handling of these elements. This entails having to use cranes with a considerable load capacity, which increase handling difficulty and necessary assembly time. Their large dimensions and heavy weight also cause serious limitations for normal road transport.

The use of the other solution found in the state of the art partly, though not completely, solves these problems, also presenting certain drawbacks.

The first of such drawbacks is because even though the bolt cage does not have a continuous surface impermeable to concreting, the reduced distance between the bolts generates a barrier that complicates placing the upper bars and even prevents continuity thereof, the use of a significant amount of auxiliary reinforcement around the interface being necessary, like in the case of the ferrule.

The parts forming the bolt cage are also supplied separately, pre-assembly prior to placing them in their final position being necessary. Furthermore, the large number of bolts necessary to be screwed into both flanges, which may occasionally reach up to 140 bolts with their corresponding nuts and washers, generates an assembly time increase in addition to the higher likelihood of errors, especially when assembly tolerances for the set are very restrictive and numerous.

As in the case of the ferrule, a large number of leveling operations are necessary due in this case to the fact that the two flanges and bolts form a rigid but deformable structure that is difficult to position and level. Therefore, as in the case of the ferrule, excessive assembly times are obtained, to which it is necessary to add the time for placing leveling feet under the lower flange, which must also be leveled.

Finally, the weight of this set formed by the two flanges and bolts is also rather high. Therefore, cranes for heavy loads are still necessary, again increasing handling difficulty and assembly time.

### Description of the Invention

The connection between a tower of a wind generator and its foundation herein described is established by an interface formed by flexible elements independent from one another.

The flexible elements forming the interface can be formed by a series of tensioned cables having a passive anchor at one of its ends and an active anchor at the other.

Said flexible elements can also be formed by a series of tensioned cables (1) having two active anchors, one of them at each of its ends.

In both cases, each of these cables is located inside vertical housing means which are embedded in the foundation, being said housing means spaced a certain distance from one another. The cables are housed inside the housing means with a gap or clearance to allow the cables to be in a vertical position even though the housing means have been embedded in the concrete with a certain inclination.

The tensioned cables can preferably be made of steel and the vertical housing means of said cables can be formed by sheaths or any other element or set of elements generating a space for housing the cable.

The tower of the wind generator can be made of metal or prestressed reinforced concrete with tensioning cables common to those of the connection or with tensioning cables independent from the latter, or from non-prestressed reinforced concrete.

The foundation can also have a central lightweighting or not.

In the cases of a foundation without central lightweighting, the passive anchor is embedded in the foundation and the cables are tensioned from the upper end thereof, whereas in the cases of a foundation with central lightweighting, the passive anchor is outside the foundation and they are tensioned from the lower end, or both anchors are active and tensioned from both ends of the cable.

The steel cables are made up of several strands, typically between 0.5 and 0.6 inches, there always being sufficient clearance to the sheath.

The breaking strength of said cables (1) is preferably greater than 1725 MPa and is preferably in a range of between 1725 and 1860 MPa, whereas the preferred yield strength must be at least 1550 and is preferably between 1550 and 1670 MPa.

In addition to the connection between a tower of a wind generator and its foundation, this specification describes the method of execution of said connection.

Said method has two variants depending on if the foundation does not have any central lightweighting or if said lightweighting exists.

Therefore, in the first case without lightweighting in the foundation, the method of execution comprises a series of stages.

The first stage is reinforcing the foundation, followed by placing the housing means of the cables.

Then the passive anchors are arranged, which anchors in this case of a foundation without lightweighting are embedded therein. The passive anchors consist of reinforcement, a flared tube and a distribution plate.

The next stage consists of threading steel cables, introducing each one into one of the vertical sheaths.

Once all these stages are performed, the foundation is concreted.

Then at least the first section of the tower is placed.

In event that the tower of the wind generator is made of metal, this first section comprises a lower flange for connecting the anchor to the tower.

In the event that the tower is made of concrete with tensioning cables common to those of the connection, all those sections the tensioning cable of which is the same as that of the connection are placed, whereas in the case of a tower made of concrete the tensioning of which is independent of the connection, the first already factory-tensioned section thereof is placed.

Then leveling mortar is poured in the upper portion of the pedestal of the foundation.

In the event that the tower is made of concrete with tensioning common to that of the connection, and this tensioning is outside the tower, it has an additional stage after pouring the mortar comprising the assembly of cable guides for guiding the cables towards the tower.

The active anchors are then assembled in the upper portion of each cable.

They are then tensioned, and the sheaths are finally filled with cementitious grout.

On the other hand, there is the case for this method of execution of the connection between a tower of a wind generator and its foundation, in which said foundation has a central lightweighting. In this case it also comprises a series of stages which begin with the reinforcement of the foundation and the formwork of the lower box.

Said box can be continuous in metal towers or, in the case of concrete towers, a discontinuous box can be formed, with angular or rounded corners, which decreases tensions and therefore the necessary reinforcement around them. This is because the diameter of the base of a concrete tower is approximately twice of that in metal towers, and therefore the perimeter thereof is also larger, there being a larger side separation between the sheaths.

Once the formwork of the box has been made, the housing means of the cables are then placed.

The foundation is concreted.

At least the first section of tower is then placed.

In the event that the tower is made of metal, the first section comprising a lower flange for connecting the anchor to the tower is placed.

In the event that the tower is made of concrete with a tensioning common to that of the connection, all those sections thereof, the cable of which is the same as that of the connection, are placed, whereas if it is made of concrete but with tensioning independent to that of the connection, only the first already factory-tensioned section of the tower is placed.

Then the leveling mortar is poured into the upper portion of the pedestal of the foundation.

In the event that the tower is made of concrete with a tensioning common to that of the connection and this tensioning is outside the tower, an additional stage of assembling the cable guides for guiding the cables towards the tower is performed.

Once the leveling mortar is placed, the cables are threaded through the inside of the vertical sheaths.

The passive anchors of each cable are then assembled. The cables may have an active anchor at each end, in which case this step would be skipped.

Then the active anchors of each cable are assembled and are finally tensioned.

To correctly fix the position of the housing means of the cables, the method may comprise using a template for fixing and separating them. This template, which can be formed by PVC or another similar material, such that it is economical, lightweight, modulable and able to be assembled manually, is embedded in the foundation. This template can be formed by a planar annular body annular having a series of holes in its surface through which the sheaths are introduced.

The connection herein proposed can also be used in the connection between section of towers, be it a steel-steel connection interface in metal towers, concrete-steel connection interface in hybrid towers or a concrete-concrete connection interface in concrete towers. The method of execution is the same as in the described cases, with the exception that in these cases it is done height-wise.

Important improvements are achieved with respect to the state of the art with the connection between a tower of a wind generator and its foundation herein proposed.

First, as a result of the flexible configuration of this proposed solution, the upper and lower flanges used up until now are eliminated, thereby achieving a considerable reduction of the amount of material used as well as of the necessary assembly time.

Furthermore, assembly can virtually be done manually, without the need for cranes, whereby everything is more manageable and assembly time is reduced.

Leveling tasks are greatly simplified because they are reduced to control of the clearance existing between the cable and the sheath, which also considerably reduces assembly time.

On the other hand, the fact that they are independent cables maintaining a specific separating distance between one another offers a solution that eliminates the total or partial impermeability existing in traditional methods, eliminating the need for the large amount of additional surrounding reinforcement that must be placed in said traditional methods.

A considerable material cost reduction, as well as an assembly cost reduction due to a significant reduction of assembly and leveling times needed, is therefore achieved. It also entails a better structural solution from the point of view that it does not generate cold joints that may cause future structural damage, whereby providing greater durability and strength to the connection interface between the tower and foundation.

Likewise, depending on the needs in each case, the associated foundation can have central lightweighting or not. The fact that it has central lightweighting enables greater accessibility in case of repair, as well as enabling tensioning of the cables from the lower portion.

These two possible foundation modes favor the existence of two variants of the method of execution of the connection, a method in which tensioning is performed from the lower portion being performed in the case where the foundation has central lightweighting, whereby obtaining, in the case of concrete towers, an elimination of losses due to friction from post-tensioning in the lower base of the tower where stresses are greater, better safety conditions and ease of tensioning operations and, in the case of metal towers, obtain a larger gap available for placing tensioning jacks.

### Brief Description of the Drawings

For the purpose of aiding to better understand the features of the invention according to a preferred practical embodiment thereof, a set of drawings is attached as an integral part of said description in which the following has been depicted with an illustrative and non-limiting character:
Figure 1 shows the general plan view of a foundation.
Figure 2 shows an enlargement of detail A of Figure 1.
Figure 3 shows a general plan view of the template for fixing and separating the sheaths.
Figure 4 shows a general cross-section view of the foundation-connection-tower set in the first case of a metal tower and a foundation without lightweighting.
Figures 5.1 and 5.2 show an enlargement of detail B of Figure 4, showing the area of the active anchor of the cable of the first case, before and after tensioning.
Figure 6 shows an enlargement of detail C of Figure 4, showing the passive anchor of the cable for the first case.
Figure 7 shows a general cross-section view of the foundation-connection-tower set in the second case of a concrete tower with tensioning independent to that of the connection and a foundation without central lightweighting.
Figure 8 shows an enlargement of detail D of Figure 7, showing the area of the active anchor of the cable.
Figure 9 shows a general cross-section view of the foundation-connection-tower set in the third case of a concrete tower with tensioning common to that of the connection and a foundation with central lightweighting.
Figures 10.1 and 10.2 show an enlargement of detail E of Figure 9, showing the area of the active anchor of the cable of the third case, before and after tensioning.
Figures 11.1 and 11.2 show an enlargement of detail F of Figure 9, showing the area of the passive anchor of the cable of the third case, before and after tensioning.
Figure 12 shows a detailed perspective view of the discontinuous lower box with rounded corners.

### Detailed Description of a Preferred Embodiment of the Invention

In view of the figures provided, it can be seen how the connection between a tower (7) of a wind generator and its foundation (8) herein proposed in the preferred embodiments of the invention comprise an interface formed by flexible elements independent from one another.

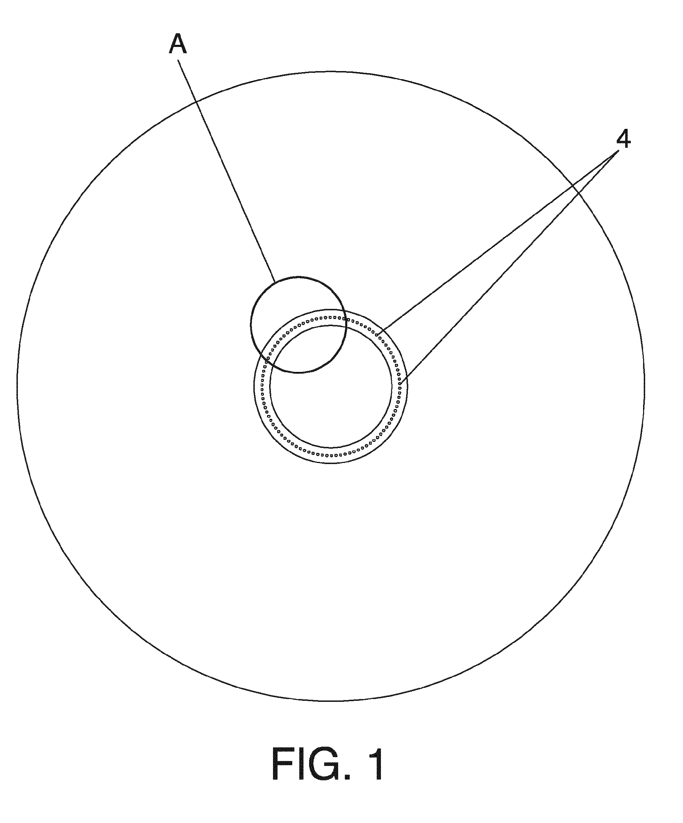

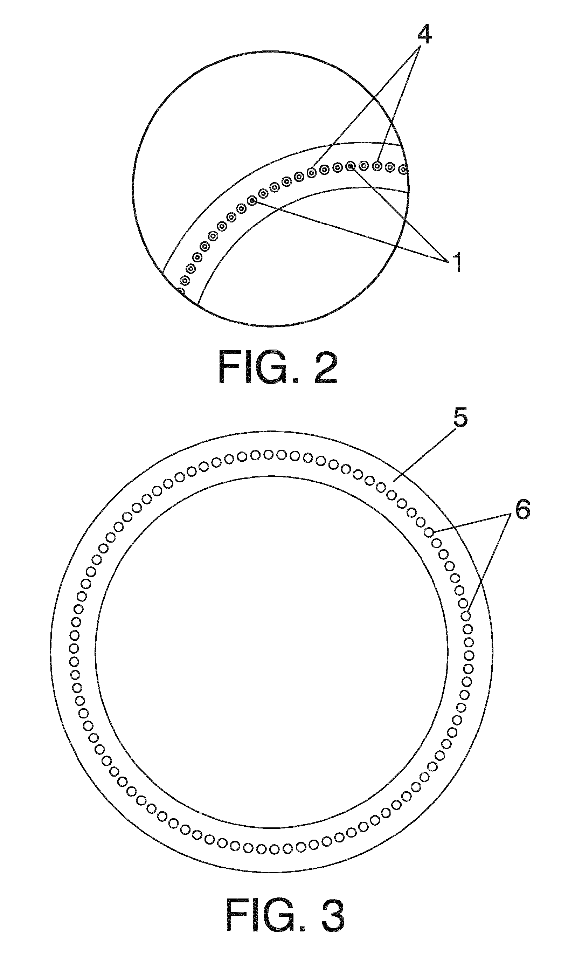

As seen in Figures 1 and 2, the flexible elements forming said interface are formed by a series of cables (1) which in these preferred embodiments of the invention are tensioned steel cables having a passive anchor (2) at one end and an active anchor (3) at the other.

Each of the cables (1) is arranged inside vertical housing means (4) which in these preferred embodiments of the invention are sheaths that are embedded in the foundation. The sheaths are located such that they maintain a certain separation from one another for which purpose a template (5) is used for fixing and separating them, shown in Figure 3. In the preferred embodiments of the invention herein described, this template (5) is formed by a planar annular body with a series of holes (6) spaced from one another on its surface for introducing sheaths (4) therein. The template is preferably made of PVC, making it a lightweight, modulable, able to be assembled manually and economical template. Like the sheaths (4), the template (5) is embedded in the foundation.

The steel cables (1) used in these preferred embodiments of the invention are made up of 7 0.5 inch strands which maintain sufficient clearance with the sheaths (4).

Typical breaking strength values of said cables (1) are in a range of between 1725 and 1860 MPa, whereas typical yield strength is between 1550 and 1670 MPa.

In a first preferred embodiment of the invention considered, the tower (7) of the wind generator is a metal tower and its foundation (8) has no central lightweighting.

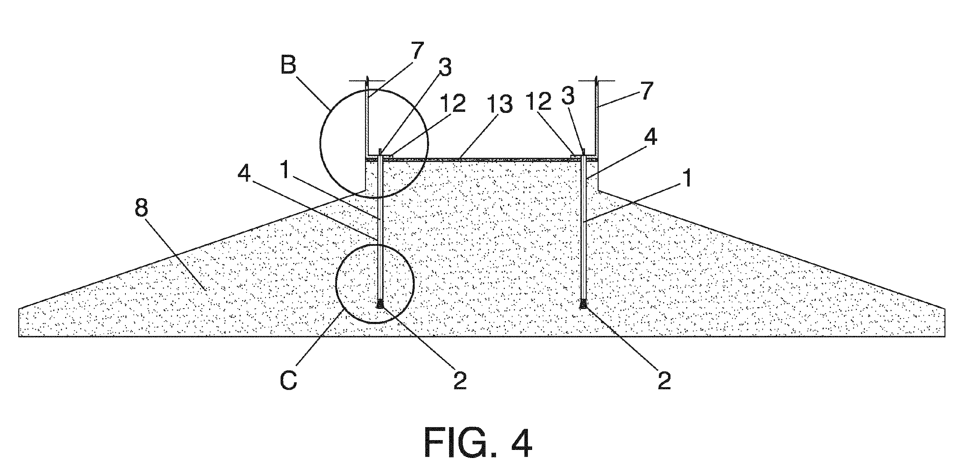

This being the case, as can be seen in Figure 4, the passive anchor (2) is embedded in the foundation (7) and the cables (1) are tensioned from the upper portion thereof.

The method of execution of the connection between said metal tower (7) and its foundation (8) without lightweighting comprises a series of stages.

The first stage is reinforcing the foundation (8) and then the vertical sheaths (4) are placed by fastening them to the reinforcement.

Then the passive anchors (2) are assembled which, as seen in Figure 4, are embedded in the foundation (8).

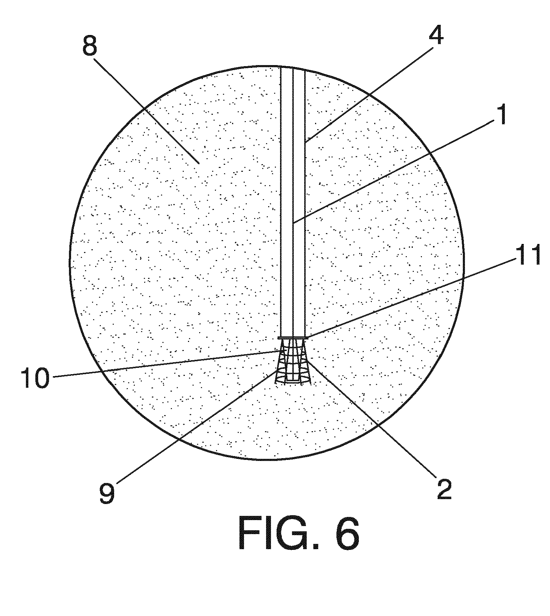

Figure 6 shows a detailed view of a passive anchor (2) with the different elements forming it, such as the reinforcement (9), the flared tube (10) and the distribution plate (11).

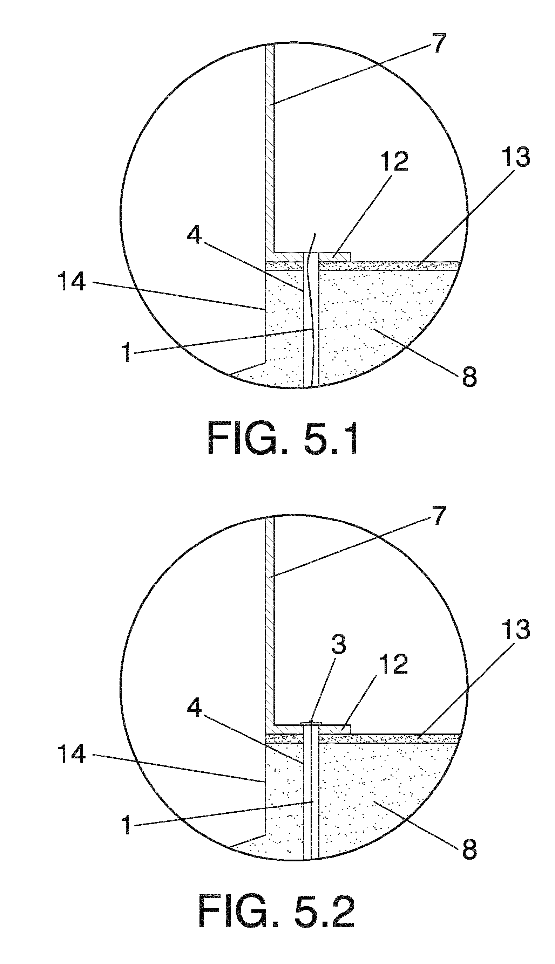

The cables (1) are then threaded through the inside of the sheaths (4), as shown in greater detail in Figure 5.1.

At this point the foundation (8) can be concreted and then the first section of the tower (7) comprising a flange (12) that will enable the connection of the tower with the anchor is placed.

For leveling the tower (7), mortar (13) is poured in the upper portion of the pedestal (14) of the foundation and, once this leveling is performed, active anchors (3) are assembled in the upper portion of each cable (1).

Figure 5.2 shows the next stage, which consist of tensioning the active anchors (3) which, as shown, acquire perfect verticality after tensioning as a result of the clearance existing between it and the side surface of the sheath (4).

The sheaths (4) are finally filled with cementitious grout.

In a second preferred embodiment of the invention, a concrete tower (7) of the wind generator has been considered, the tensioning cables (1.1) of which are independent of the cables (1) of the connection and a foundation (8) not having central lightweighting either.

The stages of the method of execution of the connection between said tower (7) and foundation (8) are the same as in the first embodiment described, with the exception that after concreting the foundation, the first previously factory-tensioned section of the tower (7) is placed.

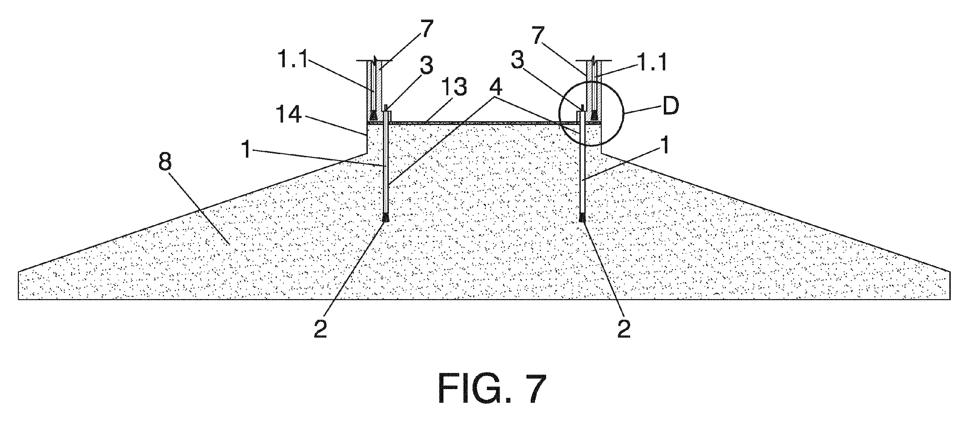

As can be seen in Figure 7, both the sheaths (4) and the passive anchor (2) are embedded in the foundation (8), as occurring in the first described embodiment, and tensioning is performed at the upper portion thereof.

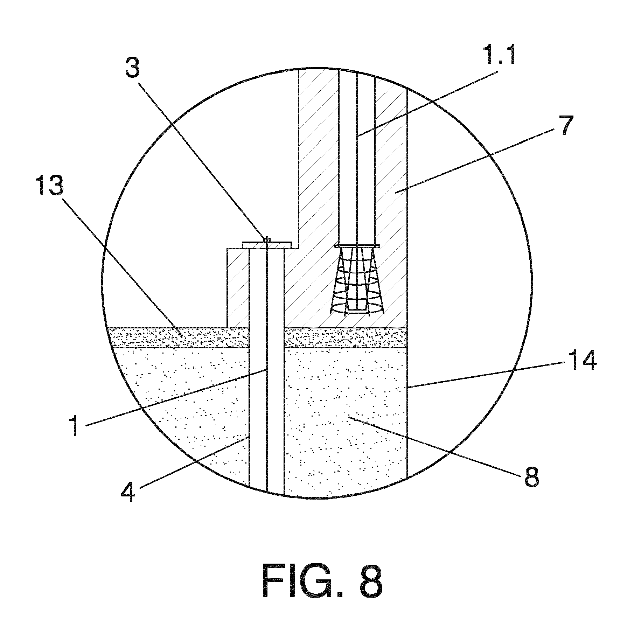

Likewise, Figure 8 shows the difference existing between the anchoring cable (1) of the connection, which cable is threaded and tensioned in this figure, and the tensioning cable (1.1) of the tower, such cables being independent of one another in this second preferred embodiment of the invention.

Finally, in a third preferred embodiment of the invention, a concrete tower (7) of the wind generator has been considered, the tensioning cables of which are common to those of the tensioning of the connection, and the foundation (8) has central lightweighting.

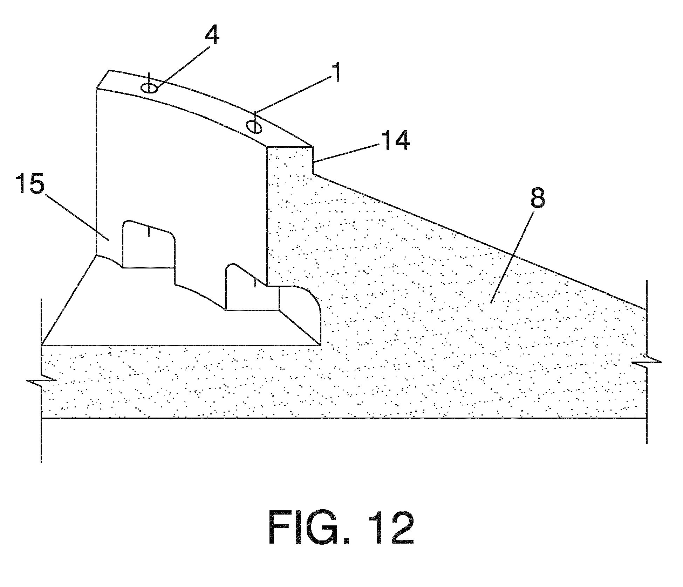

The box (15) of the foundation (8) to which the tower (7) is anchored is also discontinuous with rounded corners, as shown in Figure 12, and tensioning of the tower (7) is outside thereof.

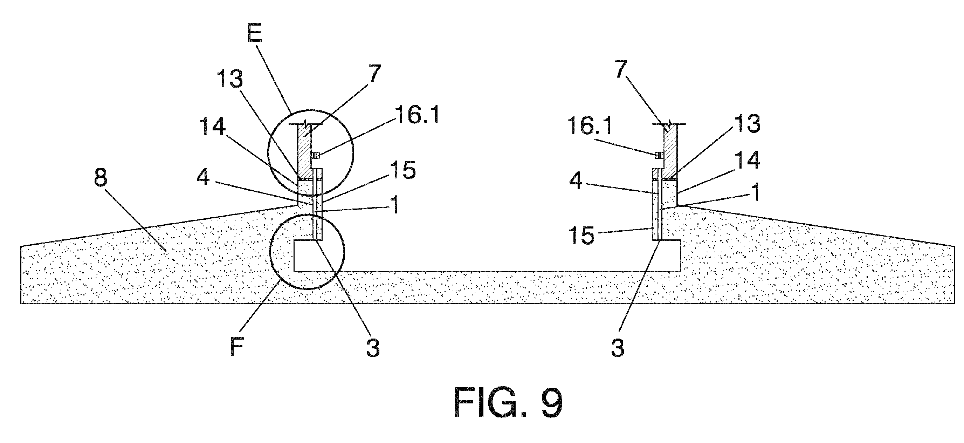

With these determinants and as shown in Figure 9, the passive anchor (2) is outside the foundation (8), the tensioning of the cables (1) is performed from the lower portion thereof and the tensioning of the tower (7) is outside thereof.

The method of execution in this case comprises, as in the previous cases, a series of stages.

The first stage is reinforcing the foundation (8) and the formwork of the discontinuous box (15).

Then vertical sheaths (4) are placed by fastening them to the reinforcement and the foundation (8) is then concreted.

Now the sections of the tower (7), the tensioning cable (1) of which is the same as that of the connection, are placed.

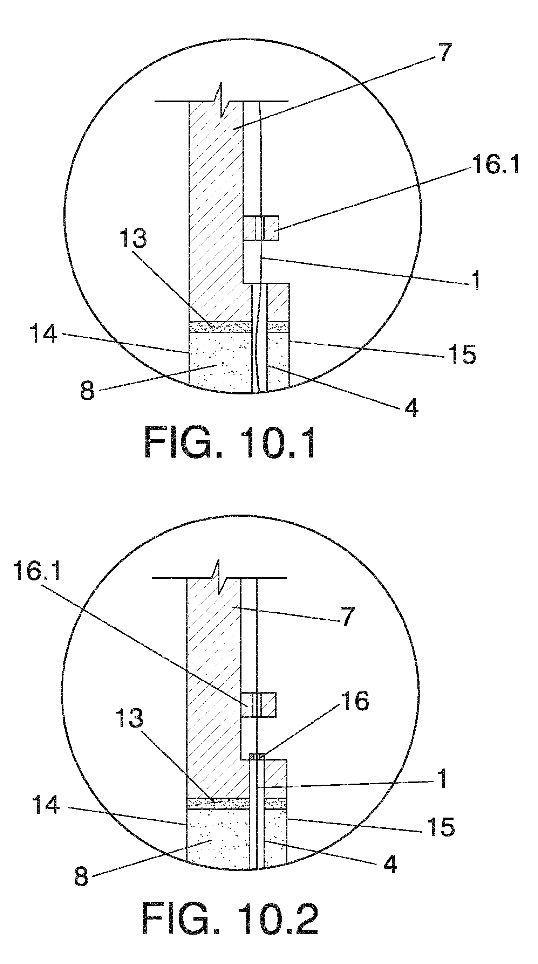

The following stage comprises pouring the leveling mortar (13) in the upper portion of the pedestal (14) of the foundation (8) and then the assembly of cable guides (16) for guiding the cables towards the tower. These guides (16) can be seen in Figures 10.1 and 10.2, where the cable guide (16) for guiding the cables towards the tower (7) and a second guide (16.1) in the tower, or diverter, are shown.

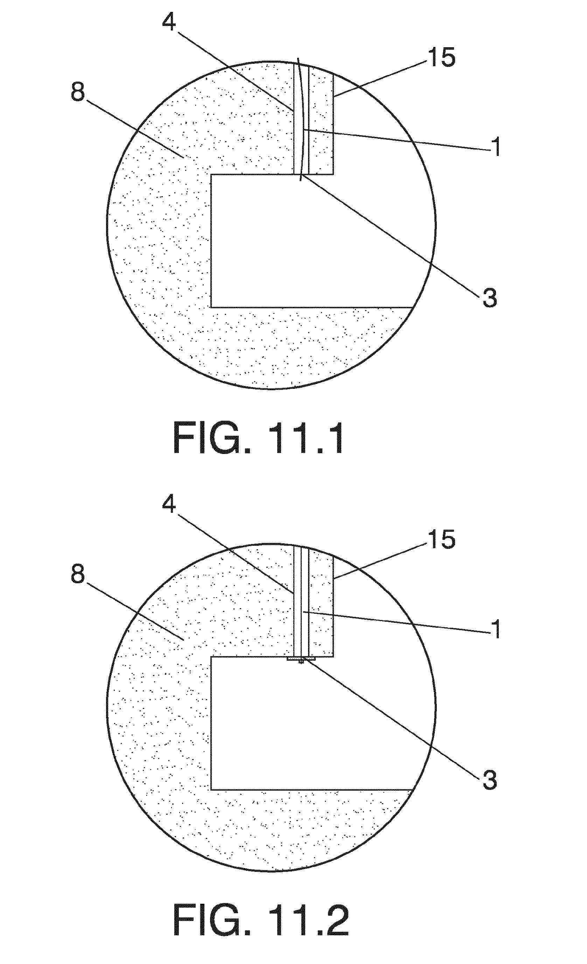

Figures 10.1 and 11.1 show in detail the result of the next stage, comprising threading the cables (1) through the inside of the sheaths (4).

Then the passive anchors (2) are assembled, which passive anchors in this preferred embodiment of the invention are located in the upper portion of each cable (1).

Then the active anchors (3) are assembled in the lower portion of each cable (1), and tensioning is performed from the lower portion thereof, as depicted in Figure 11.2.

Figure 10.2 shows how the cable (1) is arranged in the upper area of the box (15) after the tensioning.

A template is used in the three preferred embodiments of the invention herein explained for fixing and separating the cables such that the sheaths have a certain separation from one another.

Said template shown in Figure 3 in said preferred embodiments is formed by a planar annular body with a series of equidistant holes (6) in its surface for introducing the sheaths (4) therein. In these cases, it is made of PVC, but it could be made of any similar material, such that it is lightweight, modulable, easy to assemble and economical.

Multiple advantages are achieved with respect to the state of the art with the connection between a tower of a wind generator and its foundation herein proposed.

The elimination of the upper and lower flanges necessary in most methods existing today is thus enabled.

A reduction of the material used and of the assembly time is obtained by eliminating these two elements of such considerable weight and size.

Furthermore, the elements forming this connection herein proposed have very acceptable dimensions making it unnecessary to use cranes, obtaining a mucho more manageable process and with an assembly time that is again reduced with respect to the times necessary in the state of the art.

On the other hand, leveling tasks are greatly reduced and much simpler.

The total or partial impermeability partial or total existing in the state of the art is also eliminated, whereby no additional surrounding reinforcement is necessary.

With respect to the method, a simple method with a much reduced execution time with respect those existing in the state of the art is achieved. The fact that a foundation with central lightweighting can be used favors an easier and more effective method, being able to perform tensioning from the lower portion, eliminating the current complications due to the mandatory tensioning from the upper portion of the cables.

## Claims

1. Connection between a tower (7) of a wind generator and its foundation (8), **characterized in that** said connection is established by an interface formed by flexible elements independent from one another.

2. Connection between a tower (7) of a wind generator and its foundation (8) according to claim 1, **characterized in that** the flexible elements forming the interface are formed by a series of tensioned cables (1) with a passive anchor (2) at one end and an active anchor (3) at the other, each of which are inside vertical housing means (4) which are embedded in the foundation (8), said housing means being spaced a certain distance from one another.

3. Connection between a tower (7) of a wind generator and its foundation (8) according to claim 1, **characterized in that** the flexible elements forming the interface are formed by a series of tensioned cables (1) with two active anchors, each one at one of the ends, each of which is inside a vertical longitudinal element (4) that is embedded in the foundation (8), said longitudinal elements being spaced a certain distance from one another.

4. Connection between a tower (7) of a wind generator and its foundation (8) according to any of claims 1 and 2, **characterized in that** the passive anchor (2) is embedded in the foundation.

5. Connection between a tower (7) of a wind generator and its foundation (8) according to any of claims 1 and 2, **characterized in that** the passive anchor (2) is outside the foundation (8).

6. Connection between a tower (7) of a wind generator and its foundation (8) according to claim 4, **characterized in that** the tensioning of the cables (1) is performed from the upper end.

7. Connection between a tower (7) of a wind generator and its foundation (8) according to claim 5, **characterized in that** the tensioning of the cables (1) is performed from the lower end.

8. Connection between a tower (7) of a wind generator and its foundation (8) according to any of the preceding claims, **characterized in that** the section of tower (7) of the wind generator connecting with the foundation is made of concrete and the tensioning cables (1) of the connection are common to the of tensioning of the tower.

9. Connection between a tower (7) of a wind generator and its foundation (8) according to any of claims 1 to 7, **characterized in that** the section of tower (7) of the wind generator connecting with the foundation is made of concrete and the tensioning cables (1) of the connection are independent of the tensioning cables (1.1) of the tower (7).

10. Connection between a tower (7) of a wind generator and its foundation (8) according to any of claims 1 to 7, **characterized in that** the section of tower (7) of the wind generator connecting with the foundation is made of non-prestressed reinforced concrete.

11. Connection between a tower (7) of a wind generator and its foundation (8) according to any of claims 1 to 7, **characterized in that** the section of tower (7) of the wind generator connecting with the foundation is made of metal.

12. Connection between a tower (7) of a wind generator and its foundation (8) according to any of the preceding claims, **characterized in that** the tensioned cables forming the interface can be formed by steel.

13. Connection between a tower (7) of a wind generator and its foundation (8) according to any of the preceding claims, **characterized in that** the vertical housing means (4) for each of the cables can be formed by sheaths or any other element or set of elements generating a space for housing the cable.

14. Method of execution of the connection between a tower (7) of a wind generator and its foundation (8), this being a foundation without central lightweighting, as defined in claims 1 to 13, **characterized in that** it comprises the following stages
- reinforcing the foundation (8);
- placing housing means (4) of the cables;
- assembling passive anchors (2);
- threading steel cables (1);
- concreting the foundation (8);
- placing at least the first section of tower (7);
- pouring leveling mortar (13) in the upper portion of the pedestal (14) of the foundation (8);
- assembling active anchors (3) in the upper portion of each cable (1);
- tensioning the cables (1), and;
- filling sheaths (4) with cementitious grout.

15. Method of execution of the connection between a tower (7) of a wind generator and its foundation (8) according to claim 14, **characterized in that** in the case of a concrete tower (7) of the wind generator with tensioning cables (1.1) common to those of the connection, the stage of placing at least the first section of tower (7) comprises placing the sections of said tower the cable (1.1) of which is the same as the connection.

16. Method of execution of the connection between a tower (7) of a wind generator and its foundation (8) according to claim 15, **characterized in that** if the tensioning is outside the tower (7), after pouring foundation mortar (13) there is an additional stage of assembling cables guides (16, 16.1) for guiding the cables towards the tower.

17. Method of execution of the connection between a tower (7) of a wind generator and its foundation (8), this being a foundation with central lightweighting, like the connection defined in claims 1 to 13, **characterized in that** it comprises the following stages
- reinforcing the foundation (8) and formwork of the lower box (15);
- placing housing means (4) of the cables;
- concreting the foundation (8);
- placing at least the first section of tower (7);
- pouring leveling mortar (13) in the upper portion of the pedestal (14) of the foundation (8);
- threading steel cables (1);
- assembling passive anchors (2);
- assembling active anchors (3), and;
- tensioning the cables (1).

18. Method of execution of the connection between a tower (7) of a wind generator and its foundation (8) according to claim 17, **characterized in that** the lower box (15) can be discontinuous.

19. Method of execution of the connection between a tower (7) of a wind generator and its foundation (8) according to any of claims 17 and 18, **characterized in that** in the event that the tower (7) of the wind generator is made of concrete with tensioning cables (1.1) common to those of the connection and outside the tower, it comprises an additional stage of assembling cable guides (16, 16.1) for guiding the cables (1) towards the tower after pouring the leveling mortar (13).

20. Method of execution of the connection between a tower (7) of a wind generator and its foundation (8) according to any of claims 17 to 18, **characterized in that** in the event that the tower (7) of the wind generator is made of concrete with tensioning cables (1.1) common to those of the connection, in the stage of placing at least the first section of tower (7), those sections thereof the cable of which is the same as that of the connection are placed.

21. Method of execution of the connection between a tower (7) of a wind generator and its foundation (8) according to any of claims 14 to 20, **characterized in that** the housing means (4) of the cables are placed on an element for fixing and separating said means which is embedded in the foundation.
